# EUROPÄISCHE PATENTANMELDUNG

(11) **EP 2 942 239 A1**
(43) Veröffentlichungstag der Anmeldung: **11.11.2015**
(21) Anmeldenummer: 14001608.0
(22) Anmeldetag: 07.05.2014
(51) Int. Cl.: B60R 11/04

(54) **Instrumentenkamera**

(71) Anmelder: Placht, Rudolph, 80336 München (DE)
(72) Erfinder: Placht, Rudolph, 80336 München (DE)

(57) **Zusammenfassung**

Eine Einbauanordnung für eine Videokamera in Land-, Wasser- und Luftfahrzeugen umfaßt eine Videokamera, die so angeordnet ist, daß ihr Sichtfeld auf das Feld der vom Fahrzeugführer abzulesenden oder zu betätigenden Instrumente gerichtet ist, vorzugsweise den randständigen Teil des Instrumentenfeldes, und deren Bild auf einem Bildschirm an der Instrumententafel angezeigt wird. Die Anordnung bewirkt, daß der Fahrzeugführer Gesichtsfeld und Aufmerksamkeit vom Verkehrsgeschehen in der Bewegungsrichtung des Fahrzeugs beim Ablesen oder Betätigen der Instrumente nicht in größerem Maße abwendet, als er es auch zur Beobachtung des Bildschirms täte. Die Anzeige des Kamerabildes auf dem Bildschirm kann im Dauerbetrieb erfolgen oder ausgelöst werden durch die Hand des Fahrzeugfiihrers vor dem Instrumentenfeld mittels eines Bewegungssensors oder eines Formerkennungsprogramms. Die Auslösung kann außerdem durch Sprechbefehl oder Schalterbetätigung erfolgen.

## Beschreibung

Es ist bekannt, daß mit der zunehmenden Verwendung von elektronischen Systemen zur Fahrzeugführung sowie von Einrichtungen zur Erhöhung des Benutzerkomforts in Land-, Wasser- und Luftfahrzeugen die Zahl der Bedien- und Anzeigeinstrumente steigt.

Dies bringt es mit sich, daß Instrumente, die am Rand, zumal dem unteren, eines entsprechend ausgedehnten Instrumentenfeldes angeordnet sind, bei ihrer Betätigung oder ihrem Ablesen den Fahrzeugführer von der Beobachtung des Verkehrsgeschehens vor seinem Fahrzeug besonders ablenken und ihm für den vorausliegenden Verkehrsraum während des Betätigens oder Ablesens allenfalls sein peripheres Gesichtsfeld verbleibt. Während der Beschäftigung des Fahrzeugführers mit diesen Instrumenten, denen er dabei seinen Blick zuwendet, baut sich dadurch in der Fortbewegungsrichtung des Fahrzeugs eine unbeobachtete Strecke auf, mit der sich die Betriebsgefahr erhöht.

Ein Beispiel für die beschriebene Anordnung ist die Fahrzeugmittelkonsole, die für umfangreiche Tasten- und Anzeigefelder genutzt wird, ein weiteres ist die Anordnung des Klimasteuergeräts am unteren Ende der Mittelkonsole.

Ebenfalls bekannt ist die Verwendung von Bildschirmen an Instrumententafeln von Fahrzeugen, die sich auf Höhe der Hauptinstrumente angeordnet befinden, bei deren Betätigen oder Ablesen dem Fahrzeugführer ein ausreichendes Gesichtsfeld nach vorn verbleibt.

Der in den Patentansprüchen angegebenen Erfindung liegt das Problem zugrunde, die beschriebene Ablenkung des Fahrzeugführers und die Beschränkung seiner Beobachtungsmöglichkeit nach vom zu vermeiden bzw. zu verringern, während er mit der Betätigung oder dem Ablesen der randständig angeordneten Instrumente befaßt ist.

Dieses Problem wird durch die in den Patentansprüchen aufgeführten Merkmale dadurch gelöst, daß eine im Fahrzeug eingebaute Videokamera mit ihrem Sichtfeld auf das Instrumentenfeld, insbesondere dessen randständigen Bereiche, gerichtet ist und das von ihr aufgenommene Bild durch einen an der Instrumententafel, insbesondere auf Höhe der Hauptinstrumente, angeordneten Bildschirm angezeigt wird.

Statt das randständig angeordnete, abzulesende oder zu betätigende Instrument in unmittelbarer Blickführung zu betrachten und dazu seinen Blick bis auf das periphere Gesichtsfeld vom vorausliegenden Verkehrsraum abzuwenden, genügt es dem Fahrzeugführer, auf den Bildschirm zu sehen, was ihm einen größeren Teil des Gesichtsfeldes für die Sicht nach vorn beläßt.

Statt nach einem randständig angeordneten Instrument zu dessen Betätigung zu tasten, ohne dadurch aber letztlich das Hinsehen vermeiden zu können, betätigt der Fahrzeugführer das Instrument anhand des ihm von der Bildschirmanzeige rückgemeldeten Bildes seiner Hand, des Instrumentenfeldes, des gewünschten Instruments und der Relativposition seiner Hand zu diesem, ohne den Blick vom Verkehrsraum vor seinem Fahrzeug in stärkerem Maße abzuwenden, als es auch das Ablesen der blickgünstig angeordneten Hauptinstrumente erfordert.

Die weiteren Patentansprüche nach Patentanspruch 1 entsprechen den verschiedenen Möglichkeiten,
- die Videokamera im Fahrzeug anzuordnen (Patentansprüche 2 bis 10), und
- die Anzeige des von der Kamera aufgenommenen Bildes auf dem Bildschirm auszulösen (Patentansprüche 10 bis 14).

Die Anordnung der Kamera kann beispielsweise am Dachhimmel des Fahrzeugs erfolgen, an der Dachkonsole, am Windschutzscheibenrahmen, an einer Kopfstütze, an einer erhöhten Stelle der Mittelkonsole, an der Sitzarmlehne oder der Sitzrückenlehne sowie dem Getriebeschalthebel bzw. -wählhebel.

Die Auslösung kann nach Bedarf geschehen durch
- einen Bewegungssensor, der durch die vor dem im Blickfeld der Kamera befindlichen Instrumentenfeld bewegte Hand des Fahrzeugführers betätigt wird,
- Formerkennung der Hand des Fahrzeugführers vor dem Instrumentenfeld aus dem Kamerabild mittels eines Erkennungsprogramms,
- Sprechbefehls mittels eines Spracherkennungsprogramms,
- Schalterbetätigung.

Die Anzeige des Kamerabildes auf dem Bildschirm kann auch dauerhaft sein, wie sich bereits aus Patentansprüchen 1 bis 10 ergibt.

## Patentansprüche

1. Einbauanordnung einer Videokamera in Land, -Wasser oder Luftfahrzeugen,
**dadurch gekennzeichnet,**
**daß** das Sichtfeld der Videokamera auf das zur Bedienung oder Betätigung durch den Fahrzeugführer bestimmte Instrumentenfeld gerichtet ist und das von der Kamera aufgenommene Bild durch einen an der Instrumententafel des Fahrzeugs angeordneten Bildschirm angezeigt wird.

2. Einbauanordnung einer Videokamera in Land, -Wasser oder Luftfahrzeugen,
**dadurch gekennzeichnet,**
**daß** die Videokamera am Dachhimmel des Fahrzeugs angeordnet und ihr Sichtfeld auf das zur Bedienung oder Betätigung durch den Fahrzeugführers bestimmte Instrumentenfeld gerichtet ist sowie das von der Kamera aufgenommene Bild durch einen an der Instrumententafel des Fahrzeugs angeordneten Bildschirm angezeigt wird.

3. Einbauanordnung einer Videokamera in Land, -Wasser oder Luftfahrzeugen,
**dadurch gekennzeichnet,**
**daß** die Videokamera an der Dachkonsole des Fahrzeugs angeordnet und ihr Sichtfeld auf das zur Bedienung oder Betätigung durch den Fahrzeugführer bestimmte Instrumentenfeld gerichtet ist sowie das von der Kamera aufgenommene Bild durch einen an der Instrumententafel des Fahrzeugs angeordneten Bildschirm angezeigt wird.

4. Einbauanordnung einer Videokamera in Land, -Wasser oder Luftfahrzeugen,
**dadurch gekennzeichnet,**
**daß** die Videokamera am Rahmen der Windschutzscheibe des Fahrzeugs angeordnet und ihr Sichtfeld auf das zur Bedienung oder Betätigung durch den Fahrzeugführer bestimmte Instrumentenfeld gerichtet ist sowie das von der Kamera aufgenommene Bild durch einen an der Instrumententafel des Fahrzeugs angeordneten Bildschirm angezeigt wird.

5. Einbauanordnung einer Videokamera in Land, -Wasser oder Luftfahrzeugen,
**dadurch gekennzeichnet,**
**daß** die Videokamera an einer Kopfstütze des Fahrzeugs angeordnet und ihr Sichtfeld auf das zur Bedienung oder Betätigung durch den Fahrzeugführer bestimmte Instrumentenfeld gerichtet ist sowie das von der Kamera aufgenommene Bild durch einen an der Instrumententafel des Fahrzeugs angeordneten Bildschirm angezeigt wird.

6. Einbauanordnung einer Videokamera in Land, -Wasser oder Luftfahrzeugen,
**dadurch gekennzeichnet,**
**daß** die Videokamera an einer erhöhten Stelle der Mittelkonsole des Fahrzeugs angeordnet und ihr Sichtfeld auf das zur Bedienung oder Betätigung durch den Fahrzeugführer bestimmte Instrumentenfeld gerichtet ist sowie das von der Kamera aufgenommene Bild durch einen an der Instrumententafel des Fahrzeugs angeordneten Bildschirm angezeigt wird.

7. Einbauanordnung einer Videokamera in Land, -Wasser oder Luftfahrzeugen,
**dadurch gekennzeichnet,**
**daß** die Videokamera an einer Sitzarmlehne des Fahrzeugs angeordnet und ihr Sichtfeld auf das zur Bedienung oder Betätigung durch den Fahrzeugführer bestimmte Instrumentenfeld gerichtet ist sowie das von der Kamera aufgenommene Bild durch einen an der Instrumententafel des Fahrzeugs angeordneten Bildschirm angezeigt wird.

8. Einbauanordnung einer Videokamera in Land, -Wasser oder Luftfahrzeugen,
**dadurch gekennzeichnet,**
**daß** die Videokamera an einer Sitzrückenlehne des Fahrzeugs angeordnet und ihr Sichtfeld auf das zur Bedienung oder Betätigung durch den Fahrzeugführer bestimmte Instrumentenfeld gerichtet ist sowie das von der Kamera aufgenommene Bild durch einen an der Instrumententafel des Fahrzeugs angeordneten Bildschirm angezeigt wird.

9. Einbauanordnung einer Videokamera in Land, -Wasser oder Luftfahrzeugen,
**dadurch gekennzeichnet,**
**daß** die Videokamera am Getriebeschalthebel des Fahrzeugs angeordnet und ihr Sichtfeld auf das zur Bedienung oder Betätigung durch den Fahrzeugführer bestimmte Instrumentenfeld gerichtet ist sowie das von der Kamera aufgenommene Bild durch einen an der Instrumententafel des Fahrzeugs angeordneten Bildschirm angezeigt wird.

10. Einbauanordnung einer Videokamera in Land, -Wasser oder Luftfahrzeugen,
**dadurch gekennzeichnet,**
**daß** die Videokamera am Getriebewählhebel des Fahrzeugs angeordnet und ihr Sichtfeld auf das zur Bedienung oder Betätigung durch den Fahrzeugführer bestimmte Instrumentenfeld gerichtet ist sowie das von der Kamera aufgenommene Bild durch einen an der Instrumententafel des Fahrzeugs angeordneten Bildschirm angezeigt wird.

11. Einbauanordnung einer Videokamera in Land, -Wasser oder Luftfahrzeugen nach Patentansprüchen 1 bis 10,
**dadurch gekennzeichnet,**
**daß** die Auslösung der Anzeige des von der Kamera aufgenommenen Bildes auf dem Bildschirm durch einen Bewegungssensor bewirkt wird, der durch die vor dem im Sichtfeld der Kamera befindlichen Instrumentenfeld bewegte Hand des Fahrzeugführers betätigt wird.

12. Einbauanordnung einer Videokamera in Land, -Wasser oder Luftfahrzeugen nach Patentansprüchen 1 bis 10,
**dadurch gekennzeichnet,**
**daß** die Auslösung der Anzeige des von der Kamera aufgenommenen Bildes auf dem Bildschirm durch Formerkennung der Hand des Fahrzeugführers vor dem Instrumentenfeld aus dem Kamerabild mittels eines Erkennungsprogramms betätigt wird.

13. Einbauanordnung einer Videokamera in Land, -Wasser oder Luftfahrzeugen nach Patentansprüchen 1 bis 10,
**dadurch gekennzeichnet,**
**daß** die Auslösung der Anzeige des von der Kamera aufgenommenen Bildes auf dem Bildschirm durch Sprachsteuerung betätigt wird.

14. Einbauanordnung einer Videokamera in Land, -Wasser oder Luftfahrzeugen nach Patentansprüchen 1 bis 10,
**dadurch gekennzeichnet,**
**daß** die Auslösung der Anzeige des von der Kamera aufgenommenen Bildes auf dem Bildschirm durch manuelle Schalterbetätigung erfolgt.
